# EUROPEAN PATENT APPLICATION

(11) **EP 0 562 558 A1**
(43) Date of publication of application: **29.09.1993**
(21) Application number: 93104777.3
(22) Date of filing: 23.03.1993
(51) Int. Cl.: G06K 15/00, G06F 3/12

(54) **Image forming apparatus**

(30) Priority: 26.03.1992 JP 68663/92
(71) Applicant: KABUSHIKI KAISHA TOSHIBA, Kawasaki-shi, Kanagawa-ken 210 (JP)
(72) Inventor: Komine, Osamu, c/o Intellectual Property Division, Minato-ku, Tokyo 105 (JP)
(74) Representative: Henkel, Feiler, Hänzel & Partner

(57) **Abstract**

In an image forming apparatus, image data transmitted from an outer host apparatus (709) is stored in a RAM, image data is converted to bit map data, and a print operation is performed based on bit map data. A CPU (701) monitors a residual memory capacity storable in the RAM (703), and informs the outer host apparatus (709) of the residual memory capacity. The host apparatus (709) compares the informed residual memory capacity with image data to be transmitted. If image data cannot be stored in the RAM (703), a command is transmitted to the CPU (701) so as to erase erasable font or macro data in the RAM (703). Thereby, an image data storable region can be ensured. Therefore, in the process of forming a bit image, the frequency of error, which is generated by the memory insufficiency in the apparatus, can be reduced.

## Description

The present invention relates to an image forming apparatus and more particularly to an image forming apparatus wherein image data is supplied from an external unit, for example, a host apparatus and an image corresponding to the supplied image data is formed.

A laser beam printer has been known as an image forming apparatus forming an image on a recording paper in accordance with image data supplied from an external unit, for example, a host apparatus. In this apparatus, code data or image data are supplied to the laser beam printer from an external host apparatus such as an electric filing apparatus, a word processor, a personal computer, and the like, a laser beam is modulated, scanned, and irradiated on a photoconductive member, that is, a photosensitive drum, so that an electrostatic latent image corresponding to image data is formed. The electrostatic latent image is developed after an electrostatic developing process, and the image is transferred to a printing paper. That is, according to this type of the image forming apparatus, image data is expanded to bit map data, and the laser beam is modulated by bit map data. An electrostatic distribution pattern, that is, an electrostatic latent image, is formed on the photosensitive drum where the modulated laser beam is scanned. Developer such as toner is supplied to the electrostatic latent image by a developing device, so that the electrostatic latent image is developed. The developed image is transferred to the transferring material, e.g., paper, which is fed from a paper feeding device, and the developing toner is fixed by a fixing device, and is discharged.

Conventionally, the image forming apparatus comprises a Random Access Memory (RAM) as internal memory, Read Only Memory (ROM) as means for storing steps of processing image data, and a Central Processing Unit (CPU) as means for processing image data in accordance with the predetermined steps. When the image forming is performed, image data supplied from the host apparatus is decoded by CPU, and expanded to the bit image. The developed bit image data is stored in a video RAM. Normally, in this type of image forming apparatus, CPU manages RAM as a memory, and recognizes the capacity of an unused area.

However, this type of image forming apparatus does not comprise means for transmitting the memory capacity of the unused memory area to the external unit. Moreover, there is a problem in that the host apparatus transmits image data to the image forming apparatus regardless of whether or not the memory capacity of the image forming apparatus is sufficient. In this case, the image forming apparatus is in an error state due to "insufficiency of memory capacity" if sufficient memory capacity does not remain in RAM. Since the image forming apparatus cannot receive image data in the error state, a correct printing cannot be output.

An object of the present invention is to provide an image forming apparatus having an extremely low frequency of error generation due to insufficiency of the internal memory in a process of forming an bit image.

According to the present invention, there is provided an image forming apparatus comprising:
storing means for receiving image data supplied from an external unit and storing the image data;
converting and transmitting means for converting the stored image data to bit data, monitoring the storing means, and transmitting a capacity of data storable in the storing means to the external unit; and
image forming means for forming an image in accordance with the covnerted bit data.

Moreover, according to the present invention, there is provided an image forming apparatus comprising:
storing means for receiving image data supplied from an external unit and storing the image data;
converting and transmitting means for converting the stored image data to bit data, monitoring the storing means, transmitting a capacity of data storable in the storing means to the external unit, and erasing at least part of data stored in the storing means based on a data erase instruction sent from the external unit in response to the transmission, and
image forming means for forming an image in accordance with the covnerted bit data.

According to the image forming apparatus of the present invention, the capacity of data storable in storing means to which image data is recorded is monitored, and the result is transmitted to the external unit. Therefore, since data, which cannot be stored, can be prevented from erroneously being transmitted from the external unit, it can be prevented that the image forming apparatus cannot be operated. Moreover, in a case that a sufficient memory capacity is not provided in storing means, part of data transmittable from the external unit is erased from storing means, so that the sufficient memory capacity can be ensured. In other words, even if image data is transmitted from the external unit, image data can be surely stored in storing means, and surely transmitted image data can be converted to bit map data. Therefore, the stable operation of the image forming apparatus can be ensured.

This invention can be more fully understood from the following detailed description when taken in conjunction with the accompanying drawings, in which:
Fig. 1 is a perspective view showing an image forming apparatus according to a first embodiment of the present invention;
Fig. 2 is a side view of the image forming apparatus of Fig. 1;
Fig. 3 is a cross sectional view of the image forming apparatus of Fig. 1;
Fig. 4 is a partially enlarged cross sectional view of the image forming apparatus of Fig. 3;
Fig. 5 is a plane view showing a control panel shown in Fig. 1;
Fig. 6 is a block diagram showing the outline of a printer control board of the image forming apparatus of the present invention; and
Fig. 7 is a view showing algorithm of a memory controlling state of an image forming operation to be performed between the image forming apparatus and a host apparatus.

An image forming apparatus according to one embodiment of the present invention will be explained with reference to drawings.

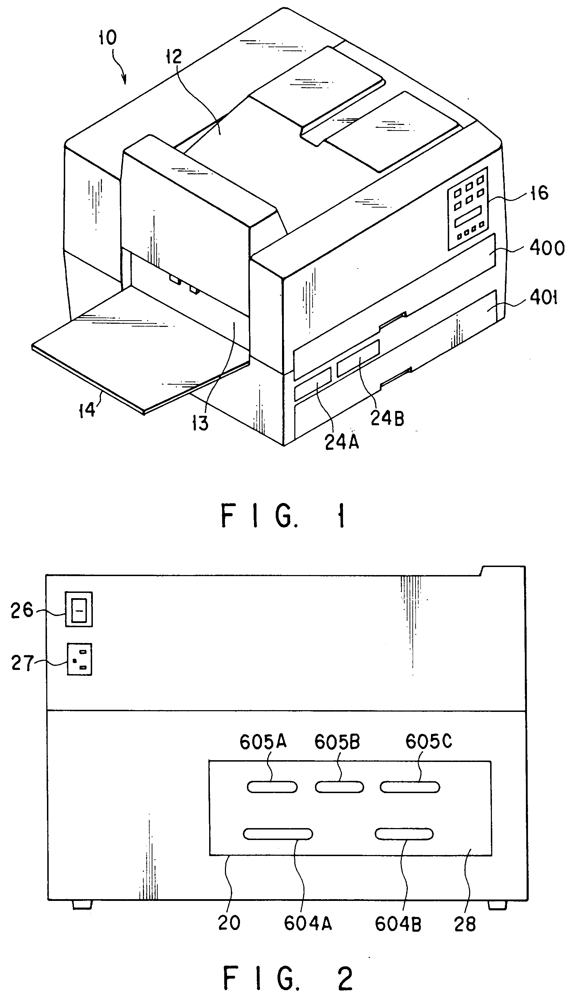

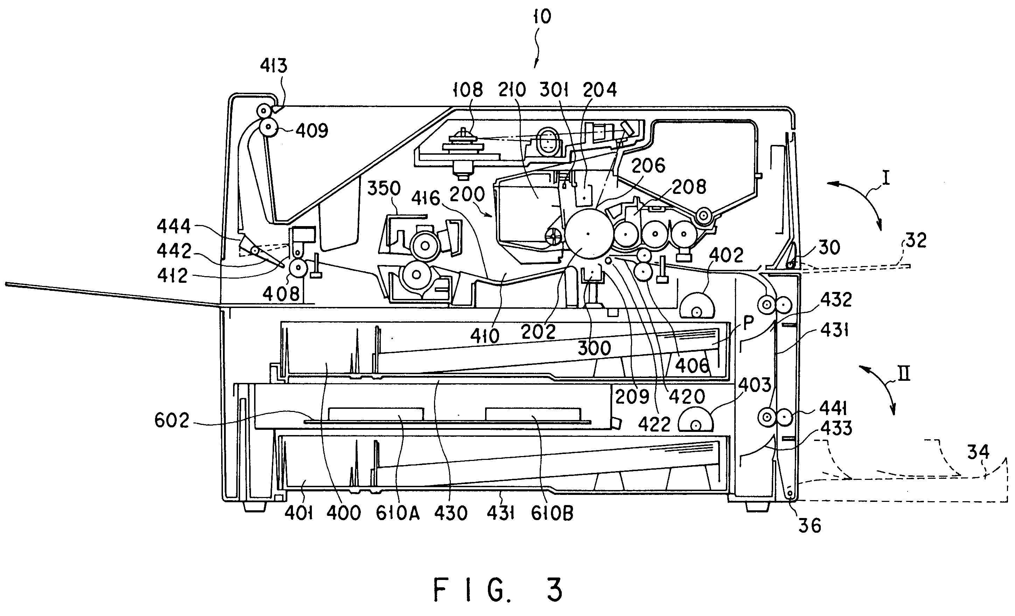

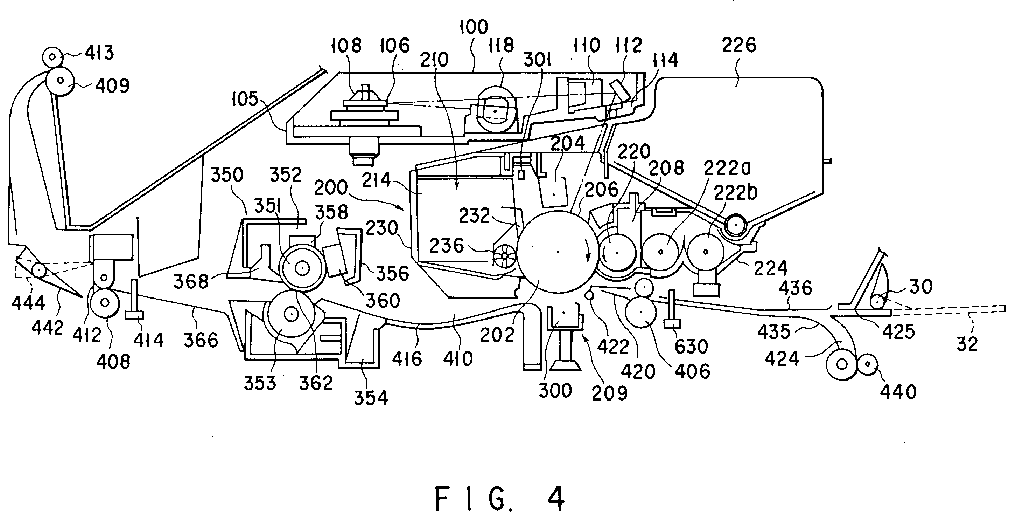

Fig. 1 is a perspective view of a laser printer as an image forming apparatus; Fig. 2 shows a rear section of the image forming apparatus; Fig. 3 is a cross sectional view showing an inner structure of the image forming apparatus; and Fig. 4 is an enlarged view of Fig. 3.

As shown in Fig. 1, in a laser printer 10 as an image forming apparatus, an upper portion of a housing is recessed such that a concave portion 12, serving as a first paper delivery section, is formed thereon. A concave portion 13, serving as a second paper delivery section, is formed on a left side portion of the housing. A paper delivery tray 14 is attached to the concave portion 13 to be detachable from the housing.

As shown in Fig. 3, a manual guide 32 is attached to a right side portion of the housing to be rotatable at a fulcrum 30, which is formed in the housing, in a direction of an arrow I of Fig. 3. A side cover 34 is attached to a lower portion of the manual guide 32 to be rotatable at a fulcrum 36, which is formed in the housing, in a direction of an arrow II of Fig. 3. As shown in Fig. 1, a control panel 16 is formed on a front right side of the housing, and paper cassettes 400 and 401 are mounted on a portion lower than the control panel 16 to be detachable from the apparatus. Moreover, there are formed openings 24A and 24B between the paper cassettes 400 and 401. The openings 24A and 24B are formed such that a font card in which external font data is stored and a card for an application soft are inserted thereto.

As shown in Fig. 2, an inlet type connector 27 for supplying power to the apparatus and a power switch 26 are provided on a rear side of the housing of the image forming apparatus 10. Moreover, an opening portion 20 is formed in a portion lower than the connector 27. A shield plate 28, which is formed of metal, is formed over the opening portion 20 to cover the opening portion 20. Connectors 604A and 604B, which are connected to a host apparatus (not shown) such as an electric filing apparatus, a word processor and the like, are attached to the shield plate 28. Connectors 605A and 605B, which are connected to a paper feeder having a large capacity, are also attached to the shield plate 28.

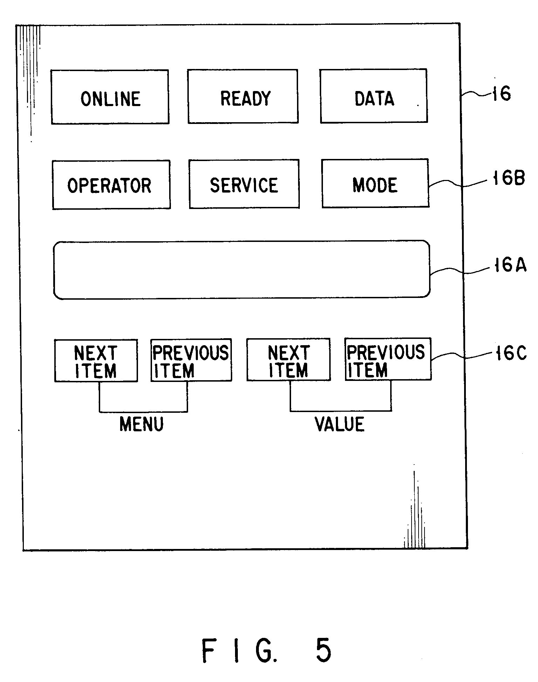

As shown in Fig. 5, the control panel 16 comprises a liquid crystal display 16A for displaying a number of paper, a mode guide message, and the like, an LED display 16B, which is lightened and displayed by various types of LEDs, and a switch 16C for displaying various types of operations. More specifically, the LED display 16B is formed of an "ONLINE" display showing whether or not the apparatus 10 is connected to the external unit, that is, online/offline mode, a "READY" display showing that the apparatus 10 is in an operatable state, a "SERVICE" display requiring an operator call, and a "MODE" display showing an auto/manual mode. The switch 16C is formed of, for example, a menu key, a value key, or a ten key (not shown). The menu key is formed of two keys, that is, "next item" and "previous item" keys. The next item of a plurality of menu data, which is displayed on a left half of the liquid crystal display 16A, is displayed every time the "next item" key is depressed, and the previous item is displayed every time the "previous item" key is depressed. These display operations are performed to be circularly repeated. The value key is also formed of two keys, that is, "next item" and "previous item" keys. The display of the next item of a plurality of value data corresponding to menu data, which is displayed on a left half of the liquid crystal display 16A, is renewed every time the "next item" key is depressed, and the display of the previous item is returned every time the "previous item" key is depressed. These display operations are also performed to be circularly repeated. For inverting the display image, an "image reversed print" is selected by the menu key of the control panel 16. An operator selects a desired operation by operating the menu key or the value key, and can send an instruction to the apparatus.

As shown in Figs. 3 and 4, a drum shape photosensitive member 202, serving as an image carrier member, is provided in the apparatus 10. A charging apparatus 204 for charging the photosensitive drum 202, which is formed of scorotron, along a rotating direction shown by an arrow, an exposure portion 206 as means for forming an electrostatic latent image on the photosensitive drum, a developing apparatus 208 for developing the electrostatic latent image with developer, a drum cleaner 210 for cleaning the photosensitive drum 202, and a pre-exposing apparatus 301 for preliminarily exposing the photosensitive drum 202 before exposing the image so as to stabilize the charging characteristic of the photosensitive drum 202 are sequentially arranged around the photosensitive drum 202. The photosensitive drum 202, the charging apparatus 204, the developing apparatus 208, the drum cleaner 210, and the pre-exposing apparatus 301 are formed as one unit. These apparatuses are arranged as an electrophotography process unit 200, which is detachable from the apparatus.

As shown in Fig. 4, in a laser exposing unit 100, a laser diode (not shown) is formed in a case 105. A laser beam 102 emitted from the laser diode is converged by a convergent lens (not shown), and is made incident on a polarizing apparatus 108. A polyhedral mirror 106, which rotates at high speed is mounted on the polarizing apparatus 108. The laser beam 102 reflected on the polygonal mirror 106 is converged on the exposing region 206 of the photosensitive drum 202 through an Fϑ lens 110, a reflecting mirror 112, and a dust proof 114, the exposing region 206 is scanned by the laser beam.

The developing apparatus 208 comprises a magnet roller 220 in a case 224, stirring rollers 222A, 222B, and developer (not shown), which is formed of two components, that is, carrier and toner. An electrostatic latent image is developed by toner. Moreover, a toner supplying apparatus 226 for supplying toner is attached to the developing apparatus 208.

An elastic blade 232 contacting the photosensitive drum 202 is provided in a case 230 of the drum cleaner 210, so that toner left on the photosensitive drum 202 is scraped away. The scraped toner is sent to a toner container 214 of the case by a transfer roller 236.

A fixing apparatus 350 comprises a heat roller 352 having a heat lamp 351 inside, and a pressing roller 353, which is pressurized by the heat roller 352. Paper P is passed between these rollers 352 and 353, so that an toner image is melted and fixed on paper P. The heat roller 352 and pressing roller 353 are surrounded by a lower casing 354 and an upper casing 356. Also, these rollers are structured so as to prevent heat from being moved to the outside in order to reserve a suitable temperature atmosphere, which is necessary for a suitable fixing. The heat roller 352 comes in contact with a cleaner 358, and is set to be in a cleaning state that the suitable fixing is always performed. Also, the surface temperature of the heat roller 352 is detected by a thermistor (not shown) to maintain temperature, which is necessary for the suitable fixing.

A guide 368 for separating paper is provided in the vicinity of the lower stream side of a contacting portion 362 between the heat roller 352 and the pressure roller 353 in the upper casing 356. The top end of paper P guided by the fixing apparatus 350 is surely separated from the heat roller 352. A paper guide 366 is provided at a paper outlet side of the fixing apparatus 350, and a fixed paper P is guided to a pair of first paper delivery rollers 408.

In the apparatus 10, an image transfer section 209 is provided between the photosensitive drum 202 and a transferring apparatus 300. A transferring guide roller 422, a pair of paper guides 420, and a pair of aligning rollers 406 are provided at the upper stream side of the image transfer portion 209. A paper transfer guide 416, the fixing apparatus 350, the pair of first paper delivery rollers 408, and a pair of second paper delivery rollers 409 are provided are provided at the lower stream stream side of the image transfer portion 209. Static-removal brushes 412 and 413, which comes in contact with a non-image forming surface side of paper P along the transferring direction of paper P, in these paper delivery rollers.

In the lower portion of the apparatus 10, paper feeding rollers 402, 403, and paper cassettes 400 and 401 are arranged. In the vicinity of the paper feeding rollers 402 and 403, there is provided a paper empty switch (not shown) for detecting paper P in the paper cassettes 400 and 401. On the side surfaces of cases 450 and 470 of paper switches 400 and 401, there is provided a paper size detection switch (not shown) for detecting a paper size of contained paper P. Moreover, there is provided a cassette detection switch (not shown) for detecting that paper cassettes 400 and 401 are mounted on the apparatus 10.

At the lower stream side of the pair of the first paper delivery rollers 408, there is provided a gate apparatus 442 for changing a delivery path of paper P to the first paper delivery section or the second paper delivery section. As shown in the figure, two positions, that is, solid side line and broken line side, can be selected, and paper P is delivered to the first or second paper delivery section.

A paper delivery path 424 is provided at the right side of the paper cassettes 400 and 401. The paper delivery path 424 comprises paper guides 431, 432, 433, and a pair of paper delivery rollers 440 and 441. The side cover 34 is integrated into the paper guide 431. At the upper stream side of the pair of the paper delivery rollers 440, there are provided paper guides 435 and 436 for guiding paper P to the pair of aligning rollers 406. Also, at the upper portion of the paper delivery path 424, there is provided a paper delivery path 425 for manually delivering paper. The paper deliver path 425 is joined to the paper delivery path 424.

An aligning switch 630 is provided in the vicinity of the pair of aligning rollers 406. Also, a paper delivery switch 414 is provided in the vicinity of the pair of the first paper delivery rollers 408, and paper P moving in the apparatus 10 is detected.

In the back side space of the apparatus 10, an engine control board (not shown) and a power supply source (not shown) are arranged. On the engine control board, there is mounted an engine controlling circuit, which controls each electrical apparatus provided in the apparatus 10 and which controls an operation for completing the electrophotography process. A printer control board 602 is arranged in a board containing section provided between the paper cassettes 400 and 401. On the printer control board 602, the printer control circuit for controlling the operation of the engine control circuit is mounted. The number of printer control boards 602, two printer control boards 602 at the maximum can be mounted in accordance with the extent of the additional functions, for example, additions of typefaces, kanji. Moreover, an outer storing apparatus (not shown), which is an additional function font card can be inserted to font card connectors 610A and 610B, which are arranged at two portions of the side edge portion of the printer board 600.

In the image forming operation, if the drum-like photosensitive drum 202 is rotated, the surface potential of the photosensitive drum 202 is maintained constant by the pre-exposing apparatus 301, and the photosensitive drum 200 is uniformly charged by the charging apparatus 204. The laser beam 102 emitted from the laser exposing unit 100 is modulated in accordance with an image signal, that is, image data. The photosensitive drum 202 is scanned and exposed with The modulated laser beam 102, and an electrostatic latent image corresponding to the image signal is formed. The electrostatic latent image on the photosensitive drum 202 is developed by the developing apparatus 208, and image-formed as a toner image, and sent to the image transfer section 209.

On the other hand, paper P taken out of the paper cassette 400 or 401 is sent to the paper guide 432 or 433 synchronously with the toner image forming operation. Then, paper P is passed through the paper delivery path 424, and sent to the image transfer section 209 through the pair of aligning rollers 406, transferring guide roller 422, and pair of paper guides 420, and the toner image formed on the photosensitive drum 202 is transferred to paper P by the transferring apparatus 300. Then, paper P is guided by the paper transfer guide 416, passed through the paper delivery path 410, sent to the fixing apparatus 350, and the toner image is melted and fixed to paper P. Paper P delivered from the manual guide 32 is passed through the manual paper delivery path 425, and guided to the paper delivery path 424, and the same operation as motioned above is carried out.

Paper P passed through the fixing apparatus 350 is sent to the pair of the paper delivery rollers 408, and sent to the gate apparatus 442. The position of the gate is selected by the instruction sent from the host apparatus in advance. In a case that the first position is selected, paper P is sent to the first paper delivery section, and discharged on the upper surface cover through the second pair of paper delivery rollers 409. In a case that the second position is selected, paper P is sent to the second paper delivery section, and discharged onto the paper delivery tray 14.

After transferring the toner image on paper P, the residual toner left on the photosensitive drum 202 is mechanically scraped away the photosensitive drum 202 by the drum cleaner 210, which is formed of an elastic member 212, and collected to a toner collecting section in the apparatus.

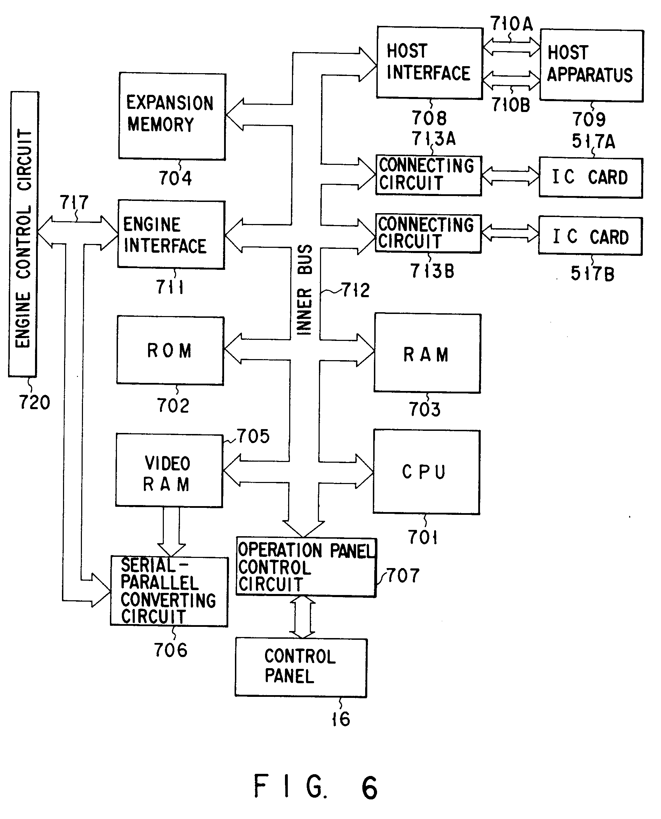

The details of the printer control board 602 will be explained with reference to Fig. 6 as follows.

In the printer control board 602 of Fig. 6, CPU 701 is connected to an inner bus 712, and controls the whole printer control board 602 through the inner bus 712. In other words, a control program, which CPU 701 executes, is stored in a ROM 702 connected to the inner bus 712. CPU 701 executes the control operation in accordance with the program. In ROM 702, a password, which is checked when data is changed, data on paper such a top margin, a left margin, a paper type, and the like other than the control program are stored. Similarly, a RAM 703 connected to the inner bus 712 is used as a page buffer. In RAM 703, code data, which is sent from a host apparatus 709 through a host interface 708 and the inner bus 712, image data including bit image data, font data, and micro data managing font data are temporarily stored. Image data such as font data other than bit image data is expanded to bit image data in accordance with micro data and a control parameter stored in ROM 702 by CPU 701, and is temporarily stored in video RAM 705.

An expansion memory 704 is provided in the inner bus 712. The expansion memory 704 is used as a memory having a large capacity in a case that image data sent from the host apparatus is the large amount of data such as bit map data and data for one page cannot be stored in RAM 703. Moreover, CPU 701 expands image data stored in RAM 703 to bit image data by the control parameter outputted from ROM 702. In this case, a video RAM 705 for storing the bit image data is connected to the inner bus 712. Parallel data of bit image sent from the video RAM 705 is supplied to a serial-parallel converting circuit 706, and converted to serial data. Serial data is sent to an motor control circuit 720. A drive signal is generated from the motor control circuit 720 in accordance with serial data, and the drive signal is synchronized with a synchronous signal, and sent to the motor. As a result, as explained above, the polyhedral mirror 106 is controlled in respond to the drive signal, and the output sent from the semiconductor laser of the laser exposing unit 100 is modulated, and an electrostatic latent image is formed on the photosensitive drum 202.

The host interface 708 is provided so as to receive and transmit data between the host apparatus 709, which is formed of an computer or an image reading apparatus, and the printer control board 602. The host interface 708 has two types of transfer lines, that is, a serial transfer line 710A for transferring serial data and parallel transfer line 710B for transferring parallel data. The serial and parallel transfer lines 710A and 710B can be suitably selected in accordance with the type of data to be transferred between the host interface 708 and the host apparatus.

An engine interface 711 is used to receive and transmit an interface signal 717 between the printer control circuit and the engine control circuit. Connecting circuits 713A and 713B, which are connected to the inner bus 712, are provided to supply power or a signal to connectors 610A and 610B of the external memory units such as cartridge font cards or IC cards 517A and 517B, and to prevent noise from being generated when the external memory unit is detached. A control panel circuit 707 is provided to control the display of the guide message on the liquid crystal display 16A of the control panel 16, to control of turning on/off or flickering the LED display 16B or flickering, or to control of sending data inputted from the switch 16C to CPU 701. The IC cards 517A and 517B as an external memory units comprise a nonvolatile memory such as static RAM with battery backup, EEPROM, EPROM, or mask ROM. In these IC cards, for example, character font data, an emulation program are stored as shown in this embodiment.

In the image forming apparatus 10 of the present invention, control data for controlling font data (down-loaded font data) down-loaded from the host apparatus 709 and macro data, that is, a control algorithm is stored in ROM 702, and font data and macro data are controlled by CPU 701 in accordance with the algorithm. In other words, these font data and macro data are down-loaded, stored in RAM 703, and used to form image forming as required. These data are erased from RAM 703 when the power supply of the image forming apparatus is cut or a command of "DELETE" is received from the host apparatus 709.

In the conventional image forming apparatus, if no sufficient memory capacity is provided in generating the bit image, An "ERROR" is displayed due to the insufficiency of the memory capacity, and the image cannot be formed. In contrast, according to the present invention, the insufficiency of the memory capacity of RAM 703 can be overcome by the following steps:
(1) The CPU 701 of the image forming apparatus confirms the residual memory capacity of RAM 703, and data of the confirmed residual memory capacity of RAM 703 is transmitted to the host apparatus 709 through the inner bus 712 and the host interface 708 from CPU 701.
(2) The host apparatus 709 compares the residual memory capacity with image data to be transmitted next, and discriminates whether or not the residual memory capacity is sufficient for transmitting image data to be transmitted next.
(3) In the case that the host apparatus 709 discriminates that the residual memory capacity is sufficient, image data is sent to CPU 701, and stored in RAM 703. In the case that the host apparatus 709 discriminates that the residual memory capacity is insufficient, an erase command of font data, which is not used in processing image data, or mask data is sent to CPU 701.
(4) The CPU 701 in which the erase command is received erases the corresponding font data or macro data from the RAM 703, and increases the residual memory capacity of the RAM 703.
(5) Even if the residual memory capacity of the RAM 703 is increased, "ERROR" is displayed on the control panel 16 of the image forming apparatus in the case that the residual memory capacity is insufficient.

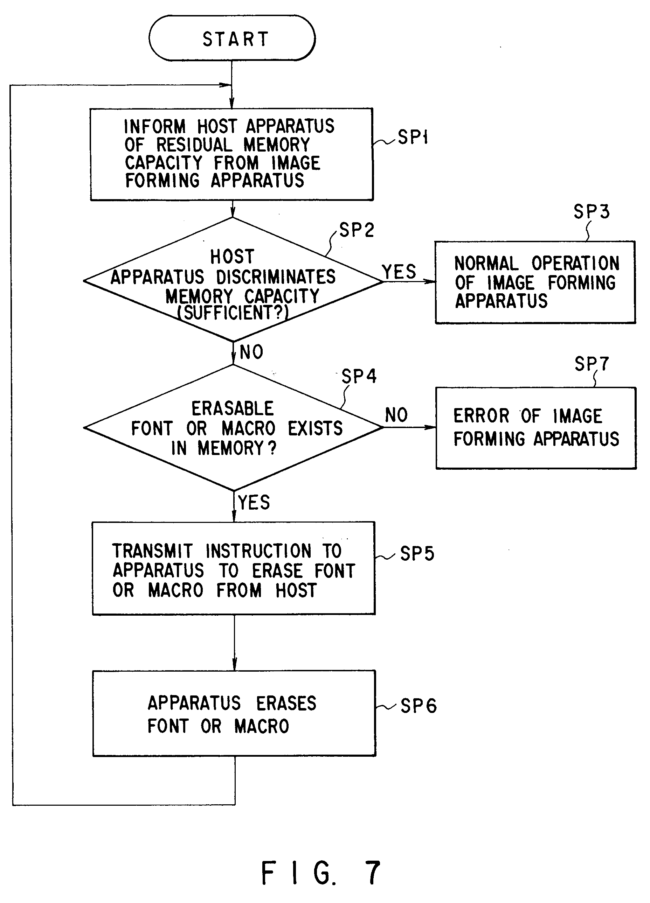

Fig. 7 shows algorithm explaining the image forming operation to be performed between the CPU 701 of the image forming apparatus and the host apparatus 709. The host apparatus discriminates whether or not the residual memory capacity of the in the image forming apparatus of the present invention is sufficient. Thereby, even if the image forming apparatus discriminates that the residual memory capacity in the image forming apparatus is insufficient, "ERROR" is not immediately generated, and the command for erasing unnecessary font data or macro data is transmitted from the host apparatus. Therefore, the frequency in which "ERROR" of the image forming apparatus is generated is extremely reduced since data is erased.

The following explains algorithm of Fig. 7.

First, it is informed from CPU 701 to the host apparatus how much the residual memory capacity of the RAM 703 is (SP1). Then, the host apparatus discriminates whether or not the residual memory capacity of the RAM 703 is sufficient for generating the bit image (SP2). In other words, the residual memory capacity of the RAM 703 sent from the CPU 701 is compared with all data sizes relating to the image forming including data sizes of code image data such as bit image data and font data, and macro data, which are sent to the RAM 703 to be stored therein, and the data size of bit image data generated by the CPU 701. Thereby, it is discriminated whether or not the data sizes are smaller than the residual memory capacity. In this case, the maximum data size of the bit image is determined by the paper size for one page where the image is formed.

In the case that the residual memory capacity is sufficient, a normal image forming is performed. If the residual memory capacity is not sufficient, it is discriminated whether or not erasable font or macro data exists in the RAM 703 (SP4). In this case, the host apparatus 709 stores font data and macro data, which are already sent to the RAM 703, and the stored data is not erased by the control signal sent from the CPU 701. Therefore, the host apparatus 709 recognizes font data and macro data stored in the RAM 703. The host apparatus 709 also recognizes font data and macro data relating to image data to be sent next for the image forming, that is, font data and macro data necessary to form the image based on image data to be sent next. Therefore, unnecessary font data and/or macro data can be recognized under the above two conditions, and font and macro data to to be erasable can be discriminated based in accordance with this recognition.

In the case that font and macro data to be erasable exist, the host apparatus transmits a command for erasing data of the RAM 703 (SP5). Then, the CPU 701 erases data of the RAM 703 (SP6). Then, the operation is returned to the first state. However, in the case that font and macro data to be erasable do not exist in the image forming apparatus, the "ERROR" state that the image forming apparatus cannot perform the image forming is informed. The above "ERROR" data is displayed on the control panel 16 by the CPU 701.

According to the image forming apparatus of the present invention, in the case that the residual memory capacity for the image forming is insufficient, unnecessary font and macro data in the storing apparatus are temporarily erased. Thereby, the image forming operation can be surely performed to the end.

While the image forming apparatus is performing the image forming operation, an operator, who operates the apparatus, often has no concern in the state of the apparatus. Due to this, it is important to surely perform the image forming operation to the end even if a little time is required. Therefore, in a case that unnecessary font and macro data in the storing apparatus are temporarily erased, thereafter font and macro data are needed, transmission from the host apparatus may be performed. Even if a little time is required to access data, the image forming operation can be surely performed to the end. In the prior art, since the image forming apparatus is in the "ERROR" state that the apparatus cannot perform the image forming in the case that the residual memory capacity is insufficient, the image forming operation stops in the middle of the operation. Due to this, the desired image forming is not ended if the operator checks the image forming output. Therefore, a new image forming operation is required, and the operator takes much time to perform the image forming operation. In other words, even if time of each image forming operation is shortened, time of the entire image forming operation is not shortened. According to the present invention, since the image forming operation can be surely performed to the end, there can be provided the image forming apparatus having little error of the image forming operation and high reliability.

## Claims

1. An image forming apparatus, comprising:
means (708) for receiving image data supplied from an external device (709);
means (703) for storing the image data received by the receiving means (708); and
means (100, 200, 300, 350, 720) for forming an image on an image bearing medium in accordance with the image data stored by the storing means (703); characterized by further comprising:
means (713A, 713B) for detecting a storable capacity of the storing means (703);
means (701) for informing the external device of the storable capacity.

2. The apparatus according to claim 1, characterized by further comprising means (24A, 24B) for connecting said detecting means (713A, 713B) to the external unit (517A, 517B).

3. The apparatus according to claim 1, characterized in that said image forming means (100, 200, 350, 720) comprises means (701, 702) for expanding a parallel image signal for forming bit image data, means (701) for converting said expanded parallel image signal to a serial image signal, and means (100, 720) for drawing an image on every line in accordance with said serial image signal.

4. The apparatus according to claim 1, characterized in that said drawing means (100, 720) comprises means (112) for generating a light beam, means (720) for modulating said light beam in accordance with the serial image signal, means (106) for scanning said modulated light beam, and means (202) for forming an electrostatic latent image by scanning said modulating light light beam, and means (300) for visualizing said electrostatic latent image.

5. An image forming apparatus for forming an image on an image bearing member, comprising:
means (708) for receiving image data supplied from an external device (709);
first storing means (703) for storing the image data received by the receiving means (708);
second storing means (704) for storing an enhancement data which modifies the image data to enhance a quality of the image;
means (100, 200, 300, 350, 720) for forming an image on an image bearing medium in accordance with the image data stored by the first storing means (703) accordance with the image data stored by the first storing means (703) and the enhancement data stored by the second storing means (704); and
means (713A, 713B) for detecting a storable capacity of the first storing means (703); characterized by further comprising:
means (701) for informing the external device of the storable capacity;
means (709), located in the external device, for outputting a data erase command to erase the enhancement data in the second storing means (704) when the storable capacity is not enough to store the image data and the image data so that the image data is stored in the second storing means (704).

6. The apparatus according to claim 5, characterized by further comprising means (24A, 24B) for connecting said detecting means (713A, 713B) to the external unit (517A, 517B).

7. The apparatus according to claim 5, characterized in that said image forming means (100, 200, 350, 720) comprises means for expanding a parallel image signal for forming bit data, means (706) for converting said expanded parallel image signal to a serial image signal, and means (100, 720) for drawing an image on every line in accordance with said serial image signal.

8. The apparatus according to claim 5, characterized in that said drawing means (100, 720) comprises means (112) for generating a light beam, means (720) for modulating said light beam in accordance with the serial image signal, means (106) for scanning said modulated light beam, and means (202) for forming an electrostatic latent image by scanning said modulating light light beam, and means (300) for visualizing said electrostatic latent image.

9. An image forming apparatus characterized by comprising:
outputting means (517A, 517B) for outputting image data and managing data relating said image data;
storing means (703) for receiving image data supplied from an external unit (709) and storing said image data;
converting means (701) for converting said stored image data to bit data, storing said bit data in said storing means (703), monitoring said storing means (703), transmitting a capacity of data storable in said storing means (703) to the external unit (709), and erasing at least part of data stored in said storing means (703) based on a data erase command sent from the external unit (709) in respond to said transmission; and
image forming means (100, 200, 300, 350, 720) for forming an image in accordance with said converted bit data.

10. The apparatus according to claim 9, characterized by further comprising means (24A, 24B) for connecting converting means (702) to the external unit (709).

11. The apparatus according to claim 9, characterized in that said image forming means (100, 200, 300, 350, 720) comprises means (701) for expanding a parallel image signal for forming bit data, means (701) for converting said expanded parallel image signal to a serial image signal, and drawing means (100, 720) for drawing an image on every line in accordance with said serial image signal.

12. The apparatus according to claim 9, characterized in that said drawing means (100, 720) comprises means (112) for generating a light beam, means (720) for modulating said light beam in accordance with the serial image signal, means (106) for scanning said modulated light beam, and means (202) for forming an electrostatic latent image by scanning said modulating light light beam, and means (300) for visualizing said electrostatic latent image.

13. The apparatus according to claim 9, characterized in that said converting means comprises storing means (702) for storing a control signal relating to a parameter for converting said image data to bit data, and signal processing means (701) for converting said image data to bit data in accordance with said control signal.
